# EUROPEAN PATENT SPECIFICATION

(11) **EP 4 367 588 B1**
(45) Date of publication and mention of the grant of the patent: **01.07.2026**
(21) Application number: 21743128.7
(22) Date of filing: 08.07.2021
(51) Int. Cl.: H04L 9/40, G06F 21/31, H04W 12/63, H04W 12/68

(54) **METHOD AND AUTHENTICATION SYSTEM FOR AUTHENTICATING A USER FOR A SERVICE**
VERFAHREN UND SYSTEM ZUM AUTHENTIFIZIEREN EINES BENUTZERS FÜR EINEN DIENST
MÉTHODE ET SYSTÈME POUR L'AUTHENTIFICATION D'UN UTILISATEUR POUR UN SERVICE

(43) Date of publication of application: 15.05.2024
(73) Proprietor: Telefonaktiebolaget LM Ericsson (publ), 164 83 Stockholm (SE)
(72) Inventor: ARNGREN, Tommy, 954 42 Södra Sunderbyn (SE); ÖKVIST, Peter, 973 41 LULEÅ (SE); SMEETS, Bernard, 247 51 DALBY (SE)
(74) Representative: Ericsson
(86) International application number: PCT/EP2021/068948
(87) International publication number: WO 2023/280407

(56) References cited:
- US-A1- 2018 145 990
- US-A1- 2020 364 716
- US-A1- 2020 364 721

## Description

### TECHNICAL FIELD

Embodiments presented herein relate to a method, an authentication system, a computer program, and a computer program product for authenticating a user for a service.

### BACKGROUND

With increased demands for secure authentication, a common requirement is the use of secure and strong passwords. In general terms, this implies that the passwords need to have high complexity (e.g., in terms of different types of characters needed in the password) and be of a certain minimum length, such as in the order of 10 characters or more. The combination of this high complexity with an equally increasing demand for usage of passwords for accessing different services does not scale well and users tend to forget complicated passwords, or store the passwords in an insecure manner (e.g., on a piece of paper or in a computer stored un-encrypted document).

To aid users, authentication systems often provide techniques to support users in remembering and/or provide means for password unlock at times the users have failed entering the correct password. The same applies also for passphrases. In this respect, a passphrase might be defined as a sentence-like string of words (possible in combination with numbers or other types of characters) used for authentication that is longer than a traditional password. The present disclosure applies equally to both passwords and passphrases and hereinafter the term password will be used to encompass both traditional passwords and passphrases.

One common approach to support users in remembering and/or provide means for password recovery is what is commonly known as security questions. Such security questions might define a handful of every-day life challenges that needs to be answered by the user first at account setup, registration, or initialization, and then at time of a locked password. Non-limiting examples of such challenges are the name of the user's teacher in the first grade, the name of the user's first school, the name of the user's first pet, the maiden name of the user's mother, the name of the user's first friend. The answer prompted by the challenge when the user is confronted with a locked password can then be compared to the answer given by the user at account setup, registration, or initialization, whereby these answers are evaluated for similarity. Apart from tediousness of remembering the answers, the questionnaires are often rather vulnerable for social hacking and open-source intelligence (OSINT) attacks. It might be comparatively easy for a hacker (either a human or a computer implemented attacker) to figure out the correct answers to most, if not all, of the challenges for a given user. Also authentication techniques based on biometrics data (such as retina scans, iris scans, face scans, fingerprints, etc.) often provide similar means for password recovery. Password recovery in the context of authentication based on biometrics data refers to situations where the biometrics data read from the user does not match a stored template of biometrics data for the user and where the authentication based on the biometrics data thus fails.

Multi-factor authentication (MFA; encompassing Two-factor authentication or 2FA, along with similar terms) is an electronic authentication method in which a user is granted access to a website or application only after successfully presenting two or more pieces of evidence (or factors) to an authentication mechanism: knowledge (something only the user knows), possession (something only the user has), and inherence (something only the user is). MFA might take away the need of next-level security backup (such as the need for re-setting passwords, or solving other issues related to handling of password recovery) as the user may be enabled to reset anything, including passwords, using a second device. But this mandates that the user in fact has access to a second device that is trusted and an application functionality that is properly paired. If this is not the case, then MFA cannot be used as a remedy.

US2018/145990 refers to techniques for providing multi-factor authentication based on positioning data.

US2020/364716 refers to systems and methods for device movement based authentication by a user, performing a device movement pattern.

In general, the overall security of an authentication technique is only as strong as the minimum strength over the type of authentication used under normal conditions (e.g., requesting the user to enter a password) and the type of technique used to handle recovery (such as password recovery). In view of the above, user authentication based on passwords or biometrics data requires some password recovery technique. But password recovery techniques based on security questions might be hacked. Further, although MFA might be remedy to this, MFA still requires the user to be in possession of a second device, which might not always be the case.

Hence, there is still a need for improved authentication techniques.

### SUMMARY

An object of embodiments herein is to address the above issues and enable efficient authentication of a user such that the above issues are avoided, or at least mitigated or reduced.

According to a first aspect there is presented method for authenticating a user for a service. The method is performed by an authentication system. The method comprises obtaining source feature data of the user to be authenticated and user attributes. The source feature data represents a by the user performed time dependent movement. The user attributes represent information of the user as extractable from sensor data. The source feature data and the user attributes is extracted from sensor data of the user as collected by at least one sensor device. The method comprises authenticating the user as a function of the source feature data and the user attributes. The user is successfully authenticated when the source feature data fulfils an evaluation criterion with respect to target feature data. The target feature data represents a, for the user and the service, expected time dependent movement. The service is associated with an authentication purpose. The evaluation criterion is a function of the authentication purpose and the user attributes and the evaluation criterion corresponds to a security class that is based on at least one of: the type of event, service or application.

According to a second aspect there is presented an authentication system for authenticating a user for a service. The authentication system comprises processing circuitry. The processing circuitry is configured to cause the authentication system to obtain source feature data of the user to be authenticated and user attributes. The source feature data represents a by the user performed time dependent movement. The user attributes represent information of the user as extractable from sensor data.

The source feature data and the user attributes is extracted from sensor data of the user as collected by at least one sensor device. The processing circuitry is configured to cause the authentication system to authenticate the user as a function of the source feature data and the user attributes. The user is successfully authenticated when the source feature data fulfils an evaluation criterion with respect to target feature data. The target feature data represents a, for the user and the service, expected time dependent movement. The service is associated with an authentication purpose. The evaluation criterion is a function of the authentication purpose and the user attributes and the evaluation criterion corresponds to a security class that is based on at least one of: the type of event, service or application.

Advantageously, these aspects enable efficient authentication of the user to the service.

Advantageously, these aspects do not suffer from the issues noted above.

Advantageously, these aspects enable the user to, after successful authentication, access the service without additional use of passwords, or the like.

Advantageously, in case the service concerns password recovery, these aspects enable the user to reset the password without the use of security questions.

Advantageously, these aspects do not rely on, or require the use of, MFA.

Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, module, step, etc." are to be interpreted openly as referring to at least one instance of the element, apparatus, component, means, module, step, etc., unless explicitly stated otherwise. The steps of any method disclosed herein do not have to be performed in the exact order disclosed, unless explicitly stated.

### BRIEF DESCRIPTION OF THE DRAWINGS

The inventive concept is now described, by way of example, with reference to the accompanying drawings, in which:
Fig. 1 is a schematic diagram illustrating a scenario according to embodiments;
Fig. 2 is a schematic diagram illustrating an authentication system and entities configured to interact with the authentication system according to embodiments;
Figs. 3 and 5 are flowcharts of methods according to embodiments;
Figs. 4 is a signalling diagram of a method according to embodiments;
Fig. 6 is a schematic diagram showing functional units of an authentication system according to an embodiment;
Fig. 7 is a schematic diagram showing functional modules of an authentication system according to an embodiment; and
Fig. 8 shows one example of a computer program product comprising computer readable storage medium according to an embodiment.

### DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step or feature illustrated by dashed lines should be regarded as optional.

The embodiments disclosed herein relate to mechanisms for authenticating a user for a service. In order to obtain such mechanisms there is provided an authentication system, a method performed by the authentication system, a computer program product comprising code, for example in the form of a computer program, that when run on an authentication system, causes the authentication system to perform the method.

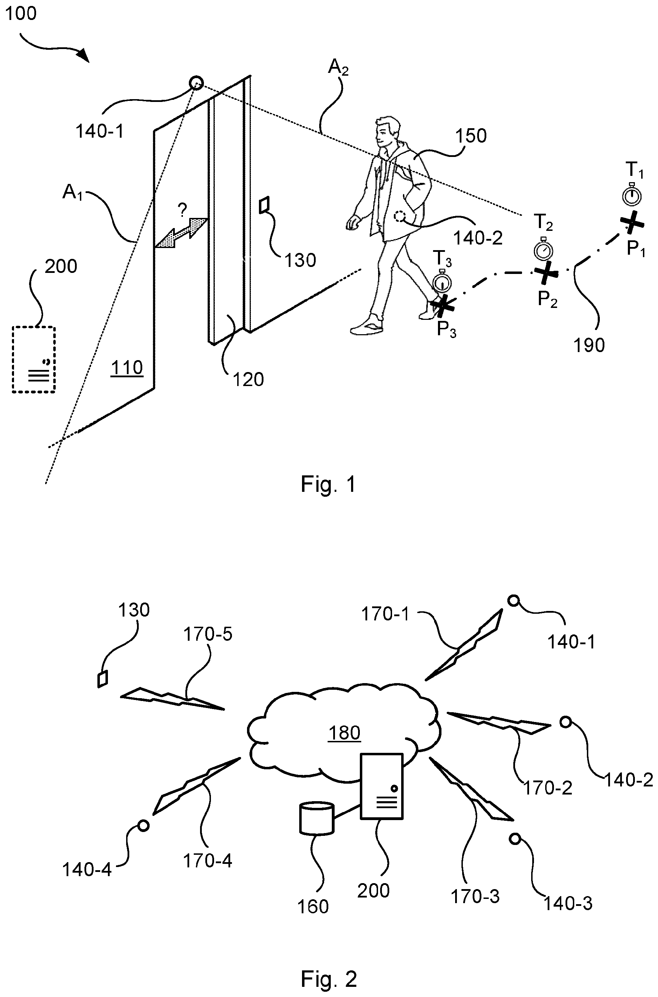

Fig. 1 illustrates at 100 an illustrative scenario where embodiments presented herein can be applied. In the scenario 100, a user 150 is approaching a door 120 to a building 110. Unlocking and opening of the door 120 is controlled by an electronic access controller 130. The electronic access controller 130 acts on a control signal provided by an authentication system 200. This control signal defines whether or not the electronic access controller 130 is to unlock and open the door 120 for a certain user 150. In Fig. 1 this is illustrated by the double-directed arrow labelled by a question mark "?",where the question mark symbolises the decision as to whether the door 120 is to be unlocked and opened or not. The authentication system 200 is configured to authenticate the user 150. Only if the user 150 is successfully authenticated the authentication system 200 will issue a control signal to the electronic access controller 130 to unlock and open the door 120 so as to enable the user 150 to enter the building 110. In this respect, access to the building 110, as controlled by the electronic access controller 130 based on the control signal from the authentication system 200, represents a service for which the user 150 is to be authenticated. Other examples of services will be disclosed below.

As will be further disclosed below, the authentication of the user 150 as performed by the authentication system 200 is based on sensor data as collected by sensor devices 140-1, 140-2. The sensor data is collected as the user 150 approaches the door 120. In this respect, according to the illustrative example of Fig. 1, the user 150 has on its way towards the door 120 been moving along a path 190. Along this path 190, the user 150 passed a first position P1 at time T1, a second position P2 at time T2, and a third position P3 at time T3. Since each position P1, P2, P3 is associated with its own point in time T1, T2, T3, the user 150 has thereby performed a time dependent movement. In some aspects, the time dependent movement is defined by time-position pairs (Ti, Pi) for i=1...N, where N is the total number of time-position pairs, and where each time-position pair consists of one position value Pi and one time value Ti. The sensor data as valid for a certain time-position pair could define a data point in a sensor trace for the user, where thus all such data points (i.e., the sensor data as valid for each of the time-position pairs) collectively defines the sensor trace for the user 150. The time dependent movement of the user 150 could thus be determined from the sensor trace. In this respect, it is here noted that the sensor data as valid for a certain time-position pair might be collected from one or more sensor devices 140-1, 140-2. It is here further noted that although in the illustrative examples of Fig. 1 the time dependent movement has been performed along a path 190, the path 190 can be substituted with a certain sequence of gestures, or the like. That is, the user 150, in order to be authenticated, might perform a sequence of movements, where each movement corresponds to a gesture. In this respect, a gesture could be performed by the user 150 moving one or more body parts, such as one, or both, arms, hands, etc. according to some pattern. Similarly, the time dependent movement might be defined by the user 150 performing a certain sequence of tasks (when moving from one position to another) in order to be authenticated. Hence, the time dependent movement might be defined by a sequence of gestures, or tasks, where a first gesture or task is performed at time T1 and corresponds to a first position P1, where a second gesture or task is performed at time T2 and corresponds to a second position P2, and where a third gesture or task is performed at time T3 and corresponds to a third position P3, and so on.

The sensor devices 140-1, 140-2 are configured to collect sensor data of the user 150 as the user 150 progresses along the path 150. Hence, each time-position pair has associated sensor data. It is here noted that sensor data from all sensor devices 140-1, 140-2 might not be available for all time-position pairs (e.g., depending on the distance between the sensor devices and the positions Pi, i=1...N. In the illustrative example of Fig. 1, there are two examples of sensor devices 140-1, 140-2. Sensor device 140-1 is mounted above the opening of the door 120 and is configured to track movement of users within a field of view extending between A1 and A2. Sensor device 140-1 might be a camera, or the like. The camera might be configured for facial recognition of the user 150. Sensor device 140-2 is carried by the user 150. Sensor device 140-2 might be a positioning device, or the like. The herein disclosed embodiments are not limited to any particular number of sensor devices 140-1, 140-2 or types of sensor devices 140-1, 140-2. Non-limiting examples of different types of sensor data that might be collected by the sensor devices 140-1, 140-2 will be disclosed below.

**Fig. 2** schematically illustrates how sensor data as collected by sensor devices 140-1, 140-2, 140-3, 140-4 is provided over links 170-1, 170-2, 170-3, 170-4 to the authentication system 200. A control signal generated by the authentication system 200 can be provided to the electronic access controller 130 over a further link 170-5. It is here understood that the electronic access controller 130 represents an interface between the authentication system 200 and the service to which the user 150 is to be authenticated. Thus, the electronic access controller 130 could in Fig. 2 be replaced by any other entity, device, or similar, that represents an interface between the authentication system 200 and the service to which the user 150 is to be authenticated. The links 170-1;170-5 might be wired, wireless, or a combination thereof, such as partly wired and partly wireless. In the schematic illustration of Fig. 2 the authentication system 200 is located in a network 180 and is operatively connected to a data storage 160. The data storage 160 might store data, such as sensor data, received by and/or generated by the authentication system 200. The data storage 160 might further store other types of data, such as one or more machine learning (ML) models, used by the authentication system 200.

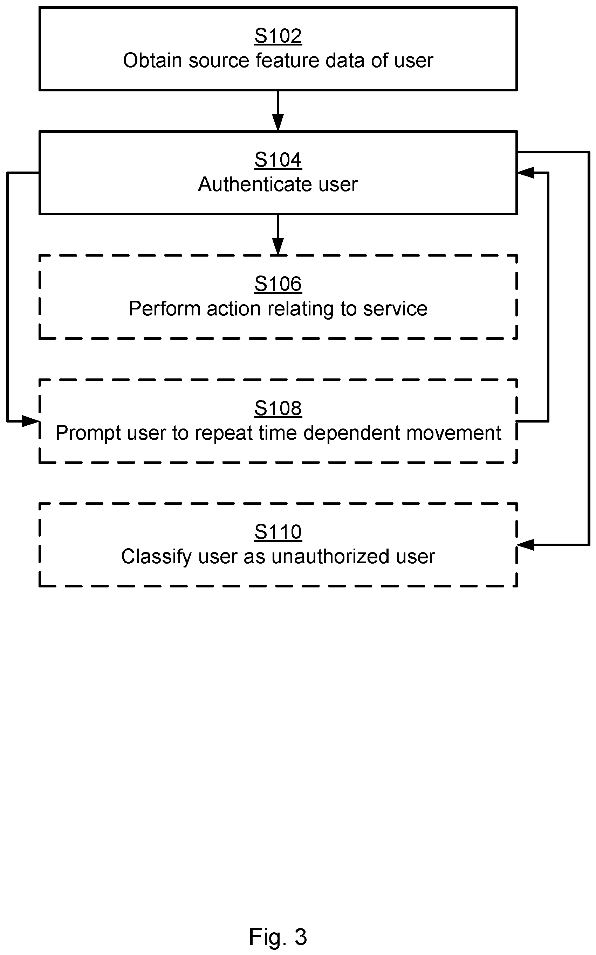

**Fig. 3** is a flowchart illustrating embodiments of methods for authenticating a user 150 for a service. The methods are performed by the authentication system 200. The methods are advantageously provided as computer programs 820.

The authentication system 200 might be configured to obtain sensor data of the user 150. The authentication system might be configured to do so either upon being prompted to do so, or autonomously.

S102: The authentication system obtains source feature data of the user 150 to be authenticated and user attributes. The source feature data represents a by the user 150 performed time dependent movement. The user attributes represent information of the user as extractable from sensor data. The source feature data and the user attributes is extracted from sensor data of the user 150 as collected by at least one sensor device 140-1:140-4.

The authentication system might thus be configured to obtain sensor data during the user's ordinary daily life. Further, the authentication system might be configured to, from the obtain sensor data, establish user attributes representing user behavior. In this respect, the authentication system might be configured to extract source feature data and user attributes from the sensor data as in step S102. The authentication system might thereby be configured to associate certain user-specific sensor data with certain user contexts. In this respect, that the user takes a certain route, or path, between two geographical positions (for example between residence and workplace) might be sufficient to indicate normal behavior of the user according to an evaluation criterion for a comparatively low level of security. For a comparatively high level of security it might additionally be required not only that the user takes the same certain route, or path, but also that the same certain route was taken at a particular point in time, or within a particular time window. Normal behavior of the user might also be characterized that the user is moving certain body parts (arms, legs, etc.) in a certain way. This can be detected either by sensor devices worn by the user, or by sensor devices in terms of cameras, or the like. As will be further disclosed below, the source feature data and the user attributes can be used as input to at least one ML model, either for training the at least one ML model or for applying the at least ML model to the source feature data and the user attributes when authenticating the user.

S104: The authentication system authenticates the user 150 as a function of the source feature data and the user attributes. The user 150 is successfully authenticated when the source feature data fulfils an evaluation criterion with respect to target feature data. The target feature data represents a, for the user 150 and the service, expected time dependent movement. The service is associated with an authentication purpose. The evaluation criterion is a function of the authentication purpose and the user attributes.

Embodiments relating to further details of authenticating a user 150 as performed by the authentication system 200 will now be disclosed.

As disclosed above, the source feature data represents a by the user 150 performed time dependent movement and is extracted from sensor data of the user 150. Further in this respect, as also disclosed above, the time dependent movement might be defined by time-position pairs (Ti, Pi), and the sensor data as valid for each of the time-position pairs might collectively define a sensor trace for the user. Therefore, the source feature data could be represented by such a sensor trace.

With regards to the user attributes, this information can be used to represent characteristics such as user context, user environment, and other information about the user. The user context might relate to as to whether the user is alone or not alone. If the user is not alone, the evaluation criterion might be stricter than when the user is alone. This is since when the user is not alone it might be more difficult to distinguish the time dependent movement as performed by the user. The user environment might relate to as to whether the user is at home or not at home. If the user is not at home, the evaluation criterion might be stricter than when the user is at home. The other information about the sensor devices might relate to accuracy of the sensor data collected by each of the sensor devices, a level of trust for each of the sensor devices. The accuracy might be represented by a standard deviation value for each sensor device. The trust level might be represented by a security rating of each sensor device. If the standard deviation is higher than some threshold value, the evaluation criterion might be stricter than when the standard deviation is lower than the threshold value. This is since when the standard deviation is high, this implies a higher degree of uncertainty in the sensor data than when the standard deviation is low. Likewise, if the security rating is lower than some threshold value, the evaluation criterion might be stricter than when the security rating is higher than the threshold value. This is since when the security rating is low, this implies a higher degree of uncertainty in the sensor data than when the security rating is high.

Depending on trust levels, the different sensor devices 140-1:140-4 may have different weights. That is, in scenarios where there are at least two sensor devices 140-1:140-4, the sensor data as collected by each of the at least two sensor devices might be assigned a respective trust level dependent weight factor. The sensor data from the at least two sensor devices might then be weighted according to the respective trust level dependent weight factor when the source feature data and the user attributes is extracted from the sensor data. In this respect, dependent on context and the time dependent movement as performed by the user, sensor data from different sensor devices may have different importance. For example, when the user is to be authenticated for being enabled to enter a building, then sensor data that provides positioning information of the user might be given a comparatively high weight. For example, when the user is to be authenticated for accessing a health care service, then then sensor data in terms of biometric data might be given a comparatively high weight.

There might be different triggers for the authentication system to authenticate the user. In some aspects, the authentication is initiated by the user. The authentication requires the source feature data to be obtained. Therefore, in some embodiments, obtaining the source feature data is initiated upon receiving user input from the user 150 to be authenticated. In other aspects, the authentication system is itself configured to monitor as to whether a potential user needs to be authenticated. This might require the authentication system to at regular intervals obtain source feature data, or at least to poll sensor data from the sensor devices. For example, if the user is expected to pass, or be within sensing distance, of a certain sensor device during a certain time interval, then the authentication system might obtain source feature data from this certain sensor device at a higher frequency of occurrence during this certain time interval than outside this certain time interval. In general terms, the frequency of occurrence at which source feature data from a certain sensor device is acquired might at a certain point in time be proportional to, or at least be a function of, the probability of the user passing, or being within sensing distance, of this certain sensor at the certain point in time. Further, the frequency of occurrence at which source feature data from a certain sensor device is acquired might depend on the security level and need for real-time data. If the security level is comparatively high, the time window during which the sensor data from which the source feature data is extracted might be comparatively shorter than the time window used when the security level is comparatively low. One reason for this is that for a security level that is comparatively high, the evaluation criterion might have higher demands on source feature data extracted from real-time sensor data than when the security level is comparatively low. For example, for a security level that is comparatively low, the evaluation criterion might not require the source feature data to be extracted from real-time sensor data, but only that the user is authenticated based on sensor data collected within some given time window. The numerical value of the frequency of occurrence might depend on the sensor type. The case where the authentication system is itself configured to monitor as to whether a potential user needs to be authenticated could thus on the one hand require more amounts of sensor data to be collected but on the other hand relieve the user from having to initiate the authentication.

Aspects relating to actions taken by the authentication system upon having authenticated the user 150 in step S104 will now be disclosed. In general terms, the authentication of the user in step S104 might either be successful or fail.

There could be different ways for the authentication system to react upon having successfully authenticated the user 150 in step S104.

Hence, in some embodiments, the authentication system is configured to, upon having successfully authenticated the user 150, perform (optional) step S106:
S106: The authentication system performs, for the user 150, an action relating to the service.

There could be different actions performed by the authentication system upon having successfully authenticated the user 150. In general terms, the type of action performed depends on the type of service for which the user has been authenticated. In some non-limiting illustrative examples, the action pertains to enabling the user 150 to any of: change a computer system password, use the source feature data as a computer system password, gain access to a computer system, gain access to a computer file, gain access to a computer service, gain access to a building 110, gain access to a room in a building 110, gain access to a vehicle. Hence, the action could pertain to password recovery for the service as well as a substitute for requiring the user 150 to enter a password to access the service. Further, there might be different levels of security for different types of buildings 110 or rooms in a building 110. For example, within a building 110 there might some areas, or rooms, that are classified (for example containing sensitive data) and such rooms are typically, in accordance with the authentication purpose, associated with a higher level of security than rooms that are not classified. Similar, a residential building might be associated with a higher level of security than a tool shed.

There could be different ways for the authentication system to react upon having failed to successfully authenticate the user 150 in step S104.

In some aspects, the authentication system requests the user 150 to repeat the time dependent movement so that the authentication system can repeat its authentication of the user 150. Hence, in some embodiments, the authentication system is configured to, upon having failed to successfully authenticate the user 150, perform (optional) step S108:
S108: The authentication system prompts the user 150 to repeat the time dependent movement. The authentication system then repeats obtaining source feature data of the user 150 (as in step S102) and repeating authenticating the user 150 (as in step S104) based on the thus repeated time dependent movement of the user 150.

In some aspects, how many times the user 150 is prompted by the authentication system to repeat the time dependent movement, or even whether or not the user 150 is prompted by the authentication system to repeat the time dependent movement, might depend on the evaluation criterion. For example, the user 150 might prompted by the authentication system to repeat the time dependent movement only for services which according to the evaluation criterion are non-critical; the less critical the service, the higher number of times the user 150 can be prompted to repeat the time dependent movement. Whether the service is non-critical or critical might be defined with respect to a security level. Aspects of how to set the security level, and thus also to determine whether a service is non-critical or critical, will be disclosed below. Particularly, in some embodiments, whether the user 150 is prompted to repeat the time dependent movement or not is defined by the evaluation criterion. In this respect, the user 150 might additionally, or alternatively, also be prompted to perform an alternative time dependent movement based on which the authentication is to be based. This alternative time dependent movement then needs to be known both by the user 150 to be authenticated and the authentication system. Which alternative time dependent movement to be performed might depend on the evaluation criterion; a more complex time dependent movement might be required for a higher security rating than for a lower security rating. Hence, if the authentication purpose corresponds to a comparatively low security rating, then the alternative time dependent movement might be less complex than the originally performed time dependent movement for the authentication.

In some aspects, when the user 150 cannot be successfully authenticated in step S104, this is by the authentication system regarded as an attempted mal-use of the service and the authentication system therefore classifies the user 150 as unauthorized user. It is here noted that the user 150 might still be a legit user 150, and that the user 150, in good faith, for some reason has failed to meet the challenge prompted by the authentication system. But because the authentication fails, the authentication system classifies the user as non-legit. Hence, in some embodiments, the authentication system is configured to, upon having failed to successfully authenticate the user 150, perform (optional) step S110:
S110: The authentication system classifies the user 150 as an unauthorized user.

Aspects relating to the evaluation criterion and how it can be set will now be disclosed.

In some embodiments, the evaluation criterion corresponds to a security class that is based on at least one of: the service, user input, at least one ML model. The above disclosed security class could thus be set either by the user 150 or determined automatically by the authentication system from the type of service. The security class may be determined automatically by the type of event, service, application, etc. together with user context information (such as position, time of day, user task or actions, etc.). The security class may also be set manually by the user.

In some aspects, the evaluation criterion is a function of the authentication purpose. Particularly, in some embodiments, the authentication purpose is mapped to an integer n, where 1≤*n*≤*N*, where n=1 represents the authentication purpose with lowest security and n=N represents the authentication purpose with highest security class, as defined by the authentication purpose. Further, n different comparisons are made between the source feature data and the target feature data for determining whether the source feature data fulfils the evaluation criterion with respect to the target feature data. In this respect, it is understood that the same mapping could be made also based on non-integers.

In some aspects, the evaluation criterion is a function of the user attributes. Particularly, in some embodiments, the user attributes is mapped to an integer t, where 1≤*t*≤*T,* where t=1 represents the user attributes with lowest security and *t=T* represents the user attributes with highest security. In this respect, it is understood that the same mapping could be made also based on non-integers.

In some aspects, the evaluation criterion correspond to a value of the pair (t, n). In this way, the evaluation criterion could dictate that for the user 150 to be successfully authenticated, t out of n comparisons must be successfully passed. That is, in some embodiments, according to the evaluation criterion, the source feature data must pass at least t out of the n different comparisons for the user 150 to be successfully authenticated.

Whether or not the evaluation criterion is fulfilled might be determined based on one or more comparisons between source feature data and target feature data. Whether or not the evaluation criterion is fulfilled might for example be determined as to whether or not the source feature data differs less than some threshold value from the target feature data. There could be one such threshold value for each of the n different comparisons.

Authenticating the user 150 in step S104 might by the authentication system be performed using at least one ML model that takes the source feature data and the user attributes as input. In general terms, the ML model is configured to arrange user application and sensor data over spatial, temporal domains and context domains, and when known, according to level of trust. The at least one ML model might be running as a cloud service in the network 180, or be native to the authentication system, or a combination of both.

Aspects relating to the use of at least one ML model when authenticating the user 150 in step S104 will now be disclosed.

In some aspects, each of the n different comparisons are made using an ML model. For example, the user might be successfully authenticated when *t*-out-of-*n* ML models fulfil their individual probability outcome *θi* > *θi*_threshold, where *i*=1*...K.* Some of the thresholds could be set to be equal. It could here thus be that *Ti=Tj* for some *i*≠*j*. Assume that there are *K*=3 different ML models available. In a first non-limiting example, for a low security level, the evaluation criterion is set so that authentication of the user is evaluated with respect to resemblance to any 2-out-of-3 (2,3) ML models, with a probability outcome > threshold_low. In a second non-limiting example, for a high security level, the evaluation criterion is set so that authentication of the user is evaluated with respect to resemblance to all 3-out-of-3 (3,3) ML models, with a probability outcome > threshold_high. In this respect even though the different ML models apply a low threshold or high threshold, these thresholds do not need to be identical, as long as they are within a relevant range, such as e.g. low, middle, high, etc. That is, in the extreme case, for one ML model, the lowest threshold might even be higher than the highest threshold for another ML model.

As disclosed above, when authenticating the user 150, a comparison is made between the source feature data and target feature data. The target feature data represents a, for the user 150 and the service, expected time dependent movement. This is in contrast to the source feature data that refers to data representing a time dependent movement performed by the user 150 for being authenticated. This target feature data might be obtained from training data. Particularly, in some embodiments, the target feature data is obtained from training data of the user 150. The training data might be learnt from further sensor data of the user 150 as collected by the at least one sensor device 140-1:140-4 prior to the source feature data based on which the user 150 is to be authenticated. The training data might be utilized for training of the at least one ML model.

The training data is generally composed of training vectors. The training vectors could represent feature data. In some examples, each such training vector represents a sequence of time-position pairs defining one time dependent movement. That is, one training vector, Vk, could take the form Vk = [(T1, P1), (T2,P2), ..., (TNk,PNk)], where (T1k, P1k), (T2k,P2k), ..., (TNk,PNk) are the time-position pairs for vector Vk, and where Nk is the total number of time-position pairs for vector Vk. The output from the ML model is an authentication decision (i.e., whether or not the user is to be successfully authenticated for a given service based on the input sequence of time-position pairs) for each training vector. The ML model could learn how make the authentication decision by using ground truth data. Ground truth data, if available, could be appended to each of the training vectors, or each of the training vectors could be labelled with ground truth data. The ground truth data for a given training vector and a given evaluation criterion could state as to whether the user 150, for the given evaluation criterion, is, or is not, to be successfully authenticated to the service based on the given training vector. The given evaluation criterion is a function of a given authentication purpose and the user attributes provided in the training data.

There could be different ways to initiate the training of the at least one ML model.

In some aspects, the training of the at least one ML model is initiated by the user 150. Hence, in some embodiments, obtaining the further source feature data from which the training data is learnt from is initiated upon receiving user input from the user 150 to be authenticated. Receiving the user input might then trigger the training of the ML model to start.

In some aspects, the training of the at least one ML model is initiated by the authentication system. In this respect, the authentication system could prompt the user 150 to perform a certain action. Then, based on sensor data as collected when the user 150 performs the prompted action, the further source feature data is obtained. In some embodiments, obtaining the further source feature data from which the training data is learnt from is thus initiated upon the authentication system 200 having prompted the user 150 to perform an action based on which the further source feature data is obtainable.

In some aspect, the further source feature data is only stored, or even obtained from the further sensor data, when the authentication system 200 has received confirmation that the user 150 was behaving as expected, i.e., as normal, when performing the prompted action. In particular, in some embodiments, the further source feature data only is obtained from the further sensor data upon the authentication system 200 having received verification from the user 150.

The type of sensor data that is collected, and from which the source feature data is extracted, generally depends of the type of sensor devices used. In some non-limiting examples the sensor data is any of: Global Navigation Satellite System (GNSS) data, Inertial Measurement Unit (IMU) data, Light Detection and Ranging (LIDAR) data, radar data, radio-frequency identification (RFID) data, radio access network (RAN) node data, basic service set identifier (BSSI) data, Bluetooth data, biometrics data. Any such sensor data could be used to extract positioning information of the user. Hence, such sensor data could be combined with time data to define time-position pairs. For example, if the user, according to some sensor data was located at a certain position at a certain point in time, this certain position and this certain point in time can define a time-position pair. As an example, RAN node data can reveal that a mobile phone associated with the user 150 was served by a certain cell at a certain time. That is, in the example of Fig. 1, that the user 150 passed a position Pi at time Ti could be determined from analysing RAN node data captured at time Ti from a RAN node placed at position Pi, for i=1...N. As an example, RFID data as read by an RFID reader from an RFID tag associated with the user can provide positioning information of the user. That is, in the example of Fig. 1, that the user 150 passed a position Pi at time Ti could be determined from analysing RFID data as read by an RFID reader at time Ti from an RFID reader placed at position Pi, for i=1...N. As an example, the biometrics data might be obtained from a camera by performing facial recognition. Such facial recognition could be used to identify the user. Hence, placing cameras at different geographical locations and analysing images captured by these cameras for facial recognition purposes could provide sensor data of the user. That is, in the example of Fig. 1, that the user 150 passed a position Pi at time Ti could be determined from analysing images captured at time Ti from a camera placed at position Pi, for i=1...N. The resolution, or level of granularity, of the positioning information of the user generally depends on the type of sensor data available. For example, RAN node data might only provide information that a wireless device, such as a mobile phone, or the like, as used by the user was connected to, or served in, a certain cell, whereas GNSS data might provide positioning information with much higher resolution. Further, triangulation based on RAN node data might increase the resolution in terms of positioning information of the user.

With further respect to that authenticating the user 150 in step S104 might by the authentication system be performed using at least one ML model, there might be different ways as how to select which at least one ML model to use and also to select which features, in terms of source feature data and user attributes, each selected ML mode is to concern. Certain sensor devices may have certain trust levels which could be of considered by the authentication system when defining a certain challenge, or evaluation criterion, or criteria. Depending on trust levels the different sensor devices may have different weights that, as disclosed above, can be used in the authentication.

Aspects, embodiments and examples concerning the use of only one single ML model for authenticating the user 150 as a function of the source feature data and the user attributes will be disclosed next.

For example, assuming a fixed number of sensor devices available over considered time, the ML model might then be trained based on sensor data from these sensor devices. Then, in a later evaluation stage where the user is to be authenticated, sensor data is again collected from the same sensor devices and evaluated by the ML model.

In that, since only one ML model has been trained using sensor data from a given number of sensor devices, a user may be compared for true-user resemblance with respect to all these sensor devices. This further implies that even if the user indeed is a legit user but decides to perform a time dependent movement (based on which the user is to be authenticated) that deviates from the expected time dependent movement, there is a risk that the source feature data will differs more than a threshold value from target feature data and hence that the evaluation criterion is not fulfilled.

This is since sensor devices placed along the path associated with the expected time dependent movement, or sensor devices carried by the user, might then not collect sensor data that yields source feature data that is similar to the target feature data representing the expected time dependent movement. The effects of this might be reduced by assigning different weight to the sensor data from which the source feature data is extracted. Another way to reduce the effects of this might be to relax the evaluation criterion, for example by lowering any threshold value set by the evaluation criterion. But this might be in conflict with the desired security class for the service the user is to be authenticated for. A yet further way to reduce the effects of this might be to use of at least two ML models for authenticating the user 150 as a function of the source feature data and the user attributes

Aspects, embodiments and examples concerning the use of at least two ML models for authenticating the user 150 as a function of the source feature data and the user attributes will be disclosed next.

In some aspects where at least two ML models are used, each ML model is trained based on its own individual set of further sensor data. In particular, each of the at least two ML models might be trained using a respective set of the training data, where each set of the training data is learnt from a respective set of further sensor data of the user 150, and where each respective set of further sensor data is collected by a respective sensor device 140-1:140-4.

In this respect, consider that each given sensor device provides a set of further sensor data that is significant and characteristic for the user. Then one ML model might be trained per each of the individual sets of further sensor data to learn the behavior of the user. During the authentication of the user in step S104, each of the ML models might then provide its own probability-readout with regards to how similar the source feature data is to the target feature data considered per ML model. Whether or not the user is to be successfully authenticated could then be determined by weighting the probability-readouts from the different ML models.

Depending on context and security level, the authentication system might select what target feature data (and thus what expected time dependent movement) to put into consideration and evaluation, how many of the probability-readouts that should be required to fulfill a certain threshold value, and what threshold values that may be considered.

The authentication system might thus select what set, or sets, of further sensor data to put into consideration and evaluation for each of the ML models, how many of the comparisons that should be required for a certain evaluation criterion, and what individual threshold values that may be considered. Particularly, each of the at least two ML models might be associated with its own threshold value (for example, its own combination of values of t and n), and, as part of authenticating the user 150, a selection can be made of the threshold value for each of the at least two ML models and of which and how many of the at least two ML models to use when authenticating the user 150. In this respect, the selection might be made based on at least one of: the security level of the service for which the user is authenticated, the trust level of the sensor devices associated with the at least one ML model, the reliability of the at least one ML model, environmental inputs, etc.

In some aspects where at least two ML models are used, multiple ML models can be trained with respect to different combinations of sets of further sensor data. In particular, each of the at least two ML models might be trained using a respective set of the training data, where each set of the training data is learnt from a respective set of further sensor data of the user 150, and where each respective set of further sensor data is collected by a respective combination of one or more sensor devices 140-1:140-4. Hence, ML models could be trained on combinations of user attributes that is considered valid for the true user, given the user context. In this approach, a set of ML models can be trained depending on combinations of different types of user attributes. In a scenario with a rather limited set of potential sensor devices available, one ML model might be trained per combination, but as the number of sensor devices increase, the factorial thereof grows rather fast, and some practical selection of user attributes to combine may therefore be considered.

The authentication system might then determine for which combinations of one or more sensor devices 140-1:140-4 each respective set of further sensor data is to be collected by according to any of: point in time at which sensor data was collected at the sensor device, location of sensor device, quality of sensor data, etc.

In an illustrative example assuming presence of a suit of sensor devices S1, S2, S3, S4, and S5. A pre-sorting algorithm might deduce that sensor data for the user cannot at the same time be obtained from both S1 and S2. Assume that sensor device S1 pertains to the user being indoors whereas sensor device S2 pertains to the user being outdoors. As a non-limiting illustrative example, assume that a user to be authenticated first is determined as indoors. Hence, authentication of this user could then be subject to evaluation according to any combination of sensors associated with the user being indoors. Similar consideration can be applied to other combinations of sensor devices. That is, assume in the present illustrative example that a pre-sorting algorithm might deduce that sensor data for the user cannot at the same time be obtained from both S1 and S3. Hence, the following sets of sensor devices could be defined: A1 = {S1, S4, S5}, and A2 = {S2, S3, S4, S5}. From set A1, one ML model could be defined for sensor data from each of the following 7 combinations of sensor devices: [S1, S4, S5, S1+S4, S1+S5, S4+S5, S1+S4+S5]. Assuming that sensor data from at least two sensor devices should be considered for each ML model reduces the number of possible combinations to: [S1+S4, S1+S5, S4+S5, S1+S4+S5], i.e., 5 different ML models. Correspondingly, from set A2, there will be 10 different ML models when assuming that sensor data from at least two sensor devices should be considered for each ML model. Hence, it could be possible to train a total of 15 different ML models for this illustrative example. Then, one or more of these ML models could be used for authenticating the user in step S104. The authentication system may prioritize what user attributes or feature data to consider, for example depending on determined sensor device robustness, signal/noise level, signal continuity, etc.

At least one ML model might be configured to drive the setting of threshold values for the specific sensor interactions with an overall aim to meet a certain trust-level for the authentication of the user. As such, there might be a first phase where there are specific *t*-out-of-*n* schemes for which the threshold values are set and that combined would map to a second phase where there is a logical *t*-out-of-*n* scheme where t expresses the required level of security, i.e. where a higher value of t corresponds to higher security. Hence, in some embodiments, authenticating the user 150 is performed in at least two phases, where in each of the at least two phases authenticating the user 150 is performed using a respective one of the at least two ML models. Between these phases, the at least one ML model can be used to adopt the threshold values for the first phase so as to give a desired threshold at the second phase.

In a first phase, there might be a set of ML models associated with sensor traces that individually may, or may not, be considered having different quality, etc., that may be used in a later phase of comparing ML model fulfilments in an *t*-out-of-*n* manner. Depending on the authentication purpose, the authentication system may select a (sub-)set of sensor traces that corresponds to user's authentication purpose; for an authentication purpose with intermediate security level, the authentication system may associate e.g. 3 low/medium quality sensor traces, or ML models, and hence set t = 3, or e.g. associate 1-2 high quality sensor traces, or ML models, and hence set t = 1 with respect to a specific authentication purpose, defining the value of n.

The authentication system may utilize an ML model that, given a certain sensor trace, learns quality attributes associated with the sensor traces and from that determine how many sensor traces of a quality metric, Qi, that may be required for a certain authentication purpose. For example, the authentication system might obtain sensor traces from a sensor device in terms of a positioning system for the user's typical everyday behaviour. The authentication system might then evaluate the quality of this sensor device (such as DOP, Dilution of Precision/coordinate drift, e.g. due to low signal strength, few satellites, etc.) and determine that one certain sensor trace (corresponding to a time dependent movement of the user from the residence of the user to the workplace of the user) is associated with comparably high DOP and should be associated with lower quality, whereas another sensor (corresponding to a time dependent movement of the user from the residence of the user to a grocery store) is associated with comparably low DOP and should be associated with higher quality.

The authentication system may in a first phase communicate the authentication purpose with other (external) nodes, e.g. with the purpose of achieving a required level of trust (as defined by the value of t) in relation to the authentication purpose (as defined by the value of n) from a service provider. For example, how to determine, or select, the values of t and n when the user is to be authenticated for a banking server-application might differ from how these values are set when the user is to be authenticated for entering his/her tool shed. The outcome of a first phase (obtainable to a second phase) may comprise a (sub)set of associated ML models and associated threshold values for fulfilment as function of the values of t and n. A later, second, phase may from the first phase obtain information how to select a threshold for at least one available user sensor trace (in respect to existing trained ML model for this sensor trace) in respect to the values of t and n.

In some aspects, the training data as obtained more recently in time is, during the training and/or actual authentication of the user, given higher weight than training data obtained more distantly in time. In this way the authentication system might implement a long short-term memory (LSTM) where the at least one ML model implements so-called forget gates. This can reduce the effect of the so-called vanishing gradient problem in the ML model

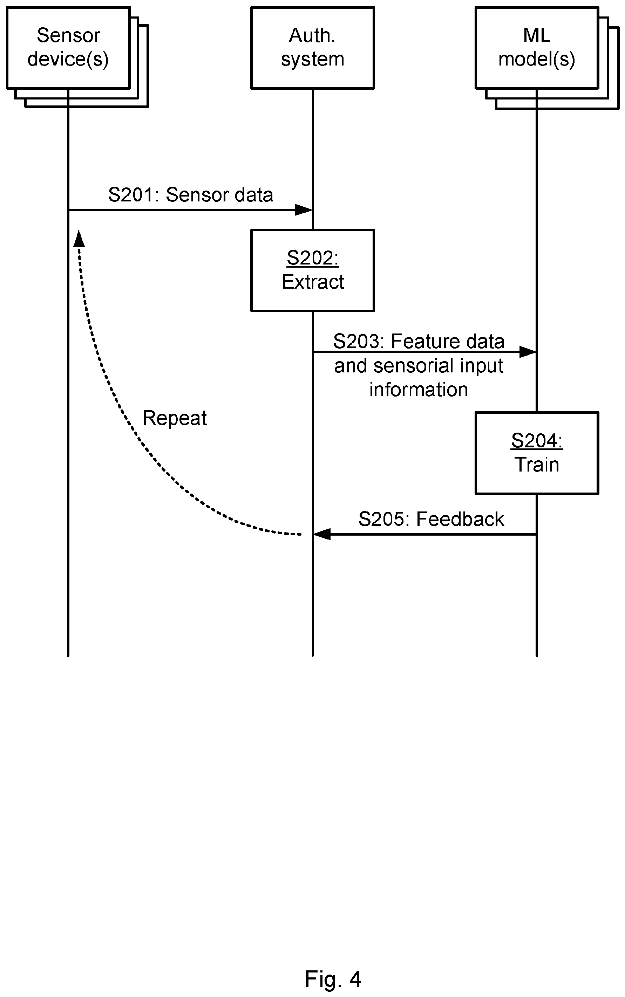

One particular embodiment for training at least one ML model based on at least some of the above disclosed embodiments, aspects, and examples will now be disclosed with reference to the signalling diagram of Fig. 4.

S201: Sensor data as collected by sensor device is provided to the authentication system.

S202: The authentication system extracts feature data and user attributes from the sensor data.

S203: The feature data and user attributes are provided as input data to at least one ML model.

S204: The at least one ML model is trained based on the provided input data. How the ML model can be trained has been disclosed above

S205: The at least one ML model provides feedback to the authentication system as to whether the training based on the latest-most input data was successful or not. If the training was successful, an acknowledgement (ACK) message is sent. Otherwise a negative acknowledgement (NACK) message is sent.

As indicated by the arrow labelled "Repeat", step S201 can then be entered again for further training of the at least one ML model.

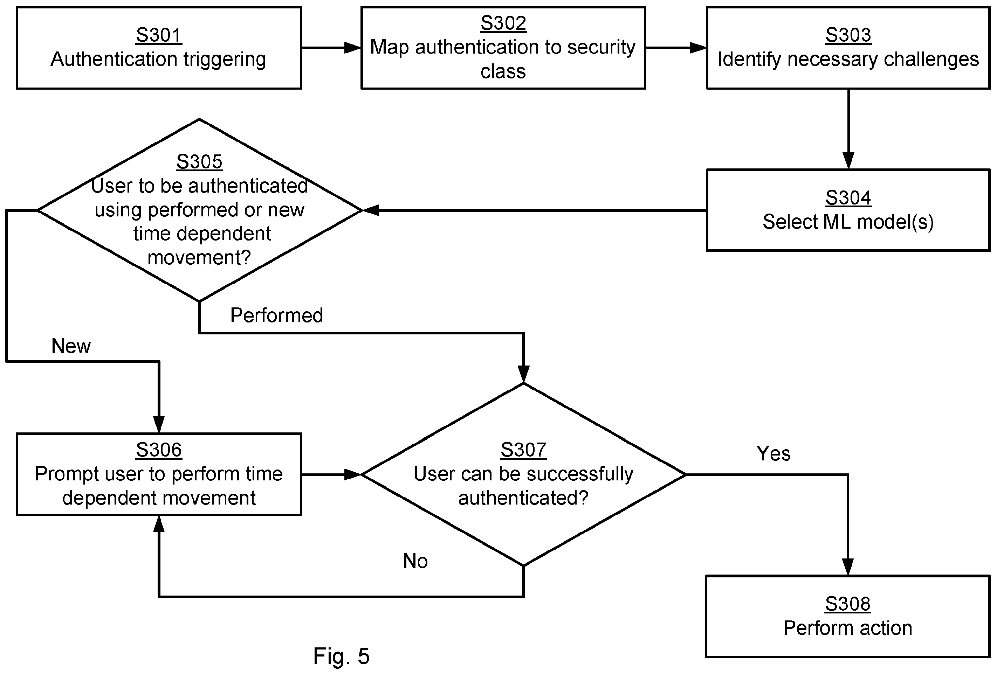

One particular embodiment for authenticating a user for a service based on at least some of the above disclosed embodiments, aspects, and examples will now be disclosed with reference to the flowchart of **Fig. 5****.**

S301: The user requires access to a service. In order for the user to access the service, the user needs to be authenticated. Hence, authentication of the user is triggered.

S302: The authentication of the user to the service is associated with, or mapped to, a certain level of security, as represented by security class X. The security class *X* corresponds to a certain evaluation criterion and might thus define values of t and n.

S303: The necessary challenges associated with security class X are identified.

S304: At least one ML model is selected from a set of trained ML models. The selected at least one ML model is valid for the security class X and the given service for which authentication is requested.

S305: The selected at least one ML model is applied to determine whether the user is to be authenticated based on a time dependent movement as already performed by the user or based on a new time dependent movement to be performed by the user. Step S306 is entered in case the user is to be authenticated based on a new time dependent movement to be performed by the user. Step S307 is entered in case the user is to be authenticated based on a time dependent movement as already performed by the user.

S306: The user is prompted to perform a time dependent movement as associated with the service for which authentication is requested. The user performs the time dependent movement whilst sensor data is collected for evaluation.

S307: The user is authenticated as in S104 based on source feature data that represents the time dependent movement performed by the user as well as user attributes. The source feature data and the user attributes are extracted from sensor data of the user 150 as collected by at least one sensor device 140-1:140-4. Step S308 is entered in case the user is successfully authenticated. In case the user cannot be successfully authenticated, the user 150 might be prompted to repeat the time dependent movement and hence step S306 might be entered again. As disclosed above, how many times the user 150 is prompted by the authentication system to repeat the time dependent movement, or even whether or not the user 150 is prompted by the authentication system to repeat the time dependent movement, might depend on the evaluation criterion.

S308: The authentication system performs, for the user 150, an action relating to the service. Examples of such actions have been provided above.

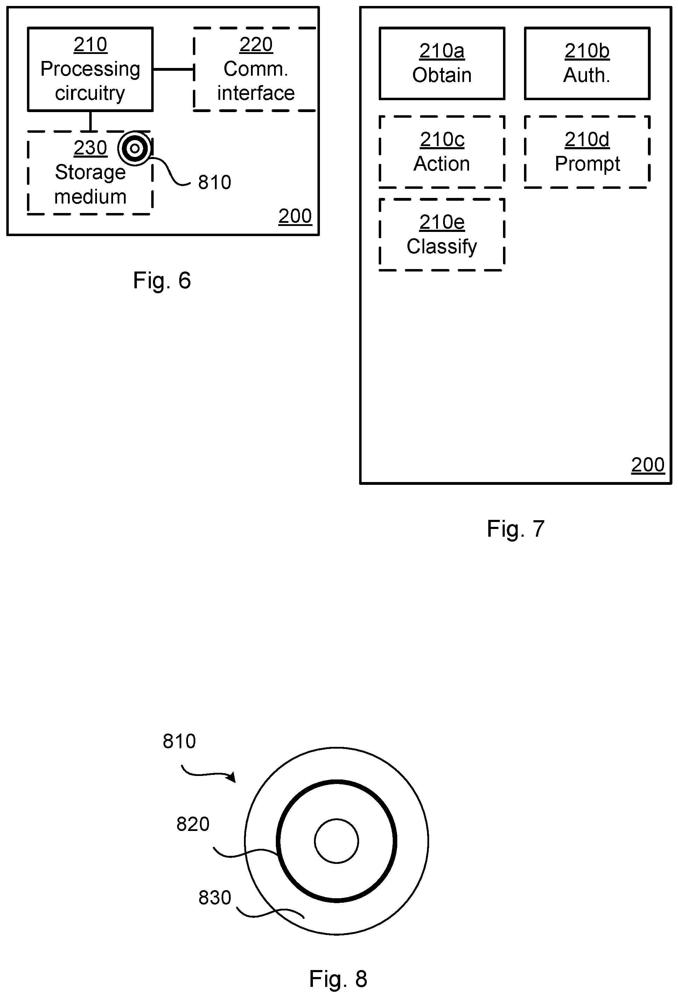

**Fig. 6** schematically illustrates, in terms of a number of functional units, the components of an authentication system 200 according to an embodiment. Processing circuitry 210 is provided using any combination of one or more of a suitable central processing unit (CPU), multiprocessor, microcontroller, digital signal processor (DSP), etc., capable of executing software instructions stored in a computer program product 810 (as in Fig. 8), e.g. in the form of a storage medium 230. The processing circuitry 210 may further be provided as at least one application specific integrated circuit (ASIC), or field programmable gate array (FPGA).

Particularly, the processing circuitry 210 is configured to cause the authentication system 200 to perform a set of operations, or steps, as disclosed above. For example, the storage medium 230 may store the set of operations, and the processing circuitry 210 may be configured to retrieve the set of operations from the storage medium 230 to cause the authentication system 200 to perform the set of operations. The set of operations may be provided as a set of executable instructions.

Thus the processing circuitry 210 is thereby arranged to execute methods as herein disclosed. The storage medium 230 may also comprise persistent storage, which, for example, can be any single one or combination of magnetic memory, optical memory, solid state memory or even remotely mounted memory. The authentication system 200 may further comprise a communications interface 220 at least configured for communications with other entities, functions, nodes, and devices, for example as illustrated in Fig. 1 and Fig. 2. As such the communications interface 220 may comprise one or more transmitters and receivers, comprising analogue and digital components. The processing circuitry 210 controls the general operation of the authentication system 200 e.g. by sending data and control signals to the communications interface 220 and the storage medium 230, by receiving data and reports from the communications interface 220, and by retrieving data and instructions from the storage medium 230. Other components, as well as the related functionality, of the authentication system 200 are omitted in order not to obscure the concepts presented herein.

**Fig. 7** schematically illustrates, in terms of a number of functional modules, the components of an authentication system 200 according to an embodiment. The authentication system 200 of Fig. 7 comprises a number of functional modules; an obtain module 210a configured to perform step S102, and an authenticate module 210b configured to perform step S104. The authentication system 200 of Fig. 7 may further comprise a number of optional functional modules, such as any of an action module 210c configured to perform step S106, a prompt module 210d configured to perform step S108, and a classify module 210e configured to perform step S110. In general terms, each functional module 210a:210e may in one embodiment be implemented only in hardware and in another embodiment with the help of software, i.e., the latter embodiment having computer program instructions stored on the storage medium 230 which when run on the processing circuitry makes the authentication system 200 perform the corresponding steps mentioned above in conjunction with Fig 8. It should also be mentioned that even though the modules correspond to parts of a computer program, they do not need to be separate modules therein, but the way in which they are implemented in software is dependent on the programming language used. Preferably, one or more or all functional modules 210a:210e may be implemented by the processing circuitry 210, possibly in cooperation with the communications interface 220 and/or the storage medium 230. The processing circuitry 210 may thus be configured to from the storage medium 230 fetch instructions as provided by a functional module 210a:210e and to execute these instructions, thereby performing any steps as disclosed herein.

The authentication system 200 may be provided as a standalone device or as a part of at least one further device. Thus, a first portion of the instructions performed by the authentication system 200 may be executed in a first device, and a second portion of the of the instructions performed by the authentication system 200 may be executed in a second device; the herein disclosed embodiments are not limited to any particular number of devices on which the instructions performed by the authentication system 200 may be executed. Hence, the methods according to the herein disclosed embodiments are suitable to be performed by an authentication system 200 residing in a cloud computational environment. Therefore, although a single processing circuitry 210 is illustrated in Fig. 6 the processing circuitry 210 may be distributed among a plurality of devices, or nodes. The same applies to the functional modules 210a:210e of Fig. 7 and the computer program 820 of Fig. 8.

**Fig. 8** shows one example of a computer program product 810 comprising computer readable storage medium 830. On this computer readable storage medium 830, a computer program 820 can be stored, which computer program 820 can cause the processing circuitry 210 and thereto operatively coupled entities and devices, such as the communications interface 220 and the storage medium 230, to execute methods according to embodiments described herein. The computer program 820 and/or computer program product 810 may thus provide means for performing any steps as herein disclosed.

In the example of Fig. 8, the computer program product 810 is illustrated as an optical disc, such as a CD (compact disc) or a DVD (digital versatile disc) or a Blu-Ray disc. The computer program product 810 could also be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 820 is here schematically shown as a track on the depicted optical disk, the computer program 820 can be stored in any way which is suitable for the computer program product 810.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

## Claims

1. A method for authenticating a user (150) for a service, the method being performed by an authentication system (200), the method comprising:
obtaining (S102) source feature data of the user (150) to be authenticated, and user attributes, wherein the source feature data represents a by the user (150) performed time dependent movement, wherein the user attributes represent information of the user (150) as extractable from sensor data, and wherein the source feature data and the user attributes is extracted from sensor data of the user (150) as collected by at least one sensor device (140-1:140-4); and
authenticating (S104) the user (150) as a function of the source feature data and the user attributes, wherein the user (150) is successfully authenticated when the source feature data fulfils an evaluation criterion with respect to target feature data, wherein the target feature data represents a, for the user (150) and the service, expected time dependent movement, wherein the service is associated with an authentication purpose, wherein the evaluation criterion is a function of the authentication purpose and the user attributes, and wherein the evaluation criterion corresponds to a security class that is based on at least one of: the type of event, service or application.

2. The method according to claim 1, wherein the method further comprises, upon having successfully authenticated the user (150):
performing (S106), for the user (150), an action relating to the service.

3. The method according to claim 2, wherein the action pertains to enabling the user (150) to any of: change a computer system password, use the source feature data as a computer system password, gain access to a computer system, gain access to a computer file, gain access to a computer service, gain access to a building (110), gain access to a room in a building (110), gain access to a vehicle.

4. The method according to claim 1, wherein the method further comprises, upon having failed to successfully authenticate the user (150):
prompting (S108) the user (150) to repeat the time dependent movement, and then repeating obtaining source feature data of the user (150) and repeating authenticating the user (150) based on a repeated time dependent movement of the user (150).

5. The method according to claim 4, wherein whether the user (150) is prompted to repeat the time dependent movement or not is defined by the evaluation criterion.

6. The method according to claim 1, wherein the method further comprises, upon having failed to successfully authenticate the user (150):
classifying (S110) the user (150) as an unauthorized user.

7. The method according to any preceding claim, wherein the evaluation criterion corresponds to a security class that is based on at least one of: the service, user input, a machine learning, ML, model.

8. The method according to any preceding claim, wherein the authentication purpose is mapped to an integer n, where 1≤*n*≤*N*, where n=1 represents the authentication purpose with lowest security and n=N represents the authentication purpose with highest security.

9. The method according to claim 8, wherein n different comparisons are made between the source feature data and the target feature data for determining whether the source feature data fulfils the evaluation criterion with respect to the target feature data.

10. The method according to any preceding claim, wherein the user attributes is mapped to an integer t, where 1≤*t*≤*T,* where t=1 represents the user attributes with lowest security and *t=T* represents the user attributes with highest security.

11. The method according to a combination of claim 9 and claim 10, wherein, according to the evaluation criterion, the source feature data must pass at least t out of the n different comparisons for the user (150) to be successfully authenticated.

12. The method according to any preceding claim, wherein there are at least two sensor devices (140-1:140-4), and wherein the sensor data as collected by each of the at least two sensors is assigned a respective trust level dependent weight factor, and wherein the sensor data from the at least two sensors is weighted according to the respective trust level dependent weight factor when the source feature data and the user attributes is extracted from the sensor data.

13. The method according to any preceding claim, wherein obtaining the source feature data is initiated upon receiving user input from the user (150) to be authenticated.

14. The method according to any preceding claim, wherein authenticating the user (150) is performed using a machine learning, ML, model taking the source feature data and the user attributes as input.

15. The method according to claim 14, wherein the target feature data is obtained from training data of the user (150), wherein the training data is learnt from further sensor data of the user (150) as collected by the at least one sensor device (140-1:140-4) prior to the source feature data based on which the user (150) is to be authenticated, and wherein the training data is utilized for training of the at least one ML model.

16. The method according to claim 15, wherein obtaining the further source feature data from which the training data is learnt from is initiated upon receiving user input from the user (150) to be authenticated, and wherein receiving the user input triggers training of the ML model.

17. An authentication system (200) for authenticating a user (150) for a service, the authentication system (200) comprising processing circuitry (210), the processing circuitry being configured to cause the authentication system (200) to:
obtain source feature data of the user (150) to be authenticated, and user attributes, wherein the source feature data represents a by the user (150) performed time dependent movement, wherein the user attributes represent information of the user (150) as extractable from sensor data, and wherein the source feature data and the user attributes is extracted from sensor data of the user (150) as collected by at least one sensor device (140-1:140-4); and
authenticate the user (150) as a function of the source feature data and the user attributes, wherein the user (150) is successfully authenticated when the source feature data fulfils an evaluation criterion with respect to target feature data, wherein the target feature data represents a, for the user (150) and the service, expected time dependent movement, wherein the service is associated with an authentication purpose, wherein the evaluation criterion is a function of the authentication purpose and the user attributes, and wherein the evaluation criterion corresponds to a security class that is based on at least one of: the type of event, service or application.

## Patentansprüche

1. Verfahren zum Authentifizieren eines Benutzers (150) für einen Dienst, wobei das Verfahren durch ein Authentifizierungssystem (200) durchgeführt wird und das Verfahren Folgendes umfasst:
Erlangen (S102) von Quellmerkmalsdaten des zu authentifizierenden Benutzers (150) und von Benutzerattributen, wobei die Quellmerkmalsdaten eine durch den Benutzer (150) durchgeführte zeitabhängige Bewegung darstellen, wobei die Benutzerattribute Informationen des Benutzers (150), wie sie aus Sensordaten extrahierbar sind, darstellen und wobei die Quellmerkmalsdaten und die Benutzerattribute aus Sensordaten des Benutzers (150), wie sie durch mindestens eine Sensorvorrichtung (140-1:140-4) erfasst werden, extrahiert werden; und
Authentifizieren (S104) des Benutzers (150) in Abhängigkeit von den Quellmerkmalsdaten und den Benutzerattributen, wobei der Benutzer (150) erfolgreich authentifiziert wird, wenn die Quellmerkmalsdaten ein Bewertungskriterium in Bezug auf Zielmerkmalsdaten erfüllen, wobei die Zielmerkmalsdaten eine für den Benutzer (150) und den Dienst erwartete zeitabhängige Bewegung darstellen, wobei der Dienst mit einem Authentifizierungszweck assoziiert ist, wobei das Bewertungskriterium eine Funktion des Authentifizierungszwecks und der Benutzerattribute ist und wobei das Bewertungskriterium einer Sicherheitsklasse entspricht, die auf mindestens einem des Folgenden basiert: der Art eines Ereignisses, eines Diensts oder einer Anwendung.

2. Verfahren nach Anspruch 1, wobei das Verfahren, nachdem es den Benutzer (150) erfolgreich authentifiziert hat, ferner Folgendes umfasst:
Durchführen (S106), für den Benutzer (150), einer Aktion in Bezug auf den Dienst.

3. Verfahren nach Anspruch 2, wobei die Aktion dazu gehört, den Benutzer (150) zu einem beliebigen des Folgenden in die Lage zu versetzen: Ändern eines Computersystempassworts, Verwenden der Quellmerkmalsdaten als ein Computersystempasswort, Erhalten von Zugang zu einem Computersystem, Erhalten von Zugang zu einer Computerdatei, Erhalten von Zugang zu einem Computerdienst, Erhalten von Zugang zu einem Gebäude (110), Erhalten von Zugang zu einem Raum in einem Gebäude (110), Erhalten von Zugang zu einem Fahrzeug.

4. Verfahren nach Anspruch 1, wobei das Verfahren, nachdem es nicht in der Lage war, den Benutzer (150) erfolgreich zu authentifizieren, ferner Folgendes umfasst:
Auffordern (S108) des Benutzers (150), die zeitabhängige Bewegung zu wiederholen, und dann Wiederholen des Erlangens der Quellmerkmalsdaten des Benutzers (150) und Wiederholen des Authentifizierens des Benutzers (150) basierend auf einer wiederholten zeitabhängigen Bewegung des Benutzers (150).

5. Verfahren nach Anspruch 4, wobei ob der Benutzer (150) dazu aufgefordert wird, die zeitabhängige Bewegung zu wiederholen oder nicht, durch das Bewertungskriterium definiert wird.

6. Verfahren nach Anspruch 1, wobei das Verfahren, nachdem es nicht in der Lage war, den Benutzer (150) erfolgreich zu authentifizieren, ferner Folgendes umfasst:
Klassifizieren (S110) des Benutzers (150) als einen nicht autorisierten Benutzer.

7. Verfahren nach einem vorhergehenden Anspruch, wobei das Bewertungskriterium einer Sicherheitsklasse entspricht, die auf mindestens einem des Folgenden basiert: dem Dienst, einer Benutzereingabe, einem Modell für maschinelles Lernen, ML-Modell.

8. Verfahren nach einem vorhergehenden Anspruch, wobei der Authentifizierungszweck einer ganzen Zahl n zugeordnet ist, wobei 1≤*n*≤*N*, wobei n=1 den Authentifizierungszweck mit einer niedrigsten Sicherheit darstellt und *n=N* den Authentifizierungszweck mit einer höchsten Sicherheit darstellt.

9. Verfahren nach Anspruch 8, wobei n unterschiedliche Vergleiche zwischen den Quellmerkmalsdaten und den Zielmerkmalsdaten zum Bestimmen, ob die Quellmerkmalsdaten das Bewertungskriterium in Bezug auf die Zielmerkmalsdaten erfüllen, vorgenommen werden.

10. Verfahren nach einem vorhergehenden Anspruch, wobei die Benutzerattribute einer ganzen Zahl t zugeordnet ist, wobei 1≤*t*≤*T*, wobei t=1 die Benutzerattribute mit einer niedrigsten Sicherheit darstellt und t=T die Benutzerattribute mit einer höchsten Sicherheit darstellt.

11. Verfahren nach einer Kombination aus Anspruch 9 und Anspruch 10, wobei, gemäß dem Bewertungskriterium, die Quellmerkmalsdaten mindestens t aus den n unterschiedlichen Vergleichen bestehen müssen, damit der Benutzer (150) erfolgreich authentifiziert wird.

12. Verfahren nach einem vorhergehenden Anspruch, wobei mindestens zwei Sensorvorrichtungen (140-1:140-4) vorhanden sind und wobei die Sensordaten, wie sie durch jeden der mindestens zwei Sensoren erfasst werden, einem jeweiligen vertrauensstufenabhängigen Gewichtungsfaktor zugewiesen werden und
wobei die Sensordaten von den mindestens zwei Sensoren gemäß dem jeweiligen vertrauensstufenabhängigen Gewichtungsfaktor gewichtet werden, wenn die Quellmerkmalsdaten und die Benutzerattribute aus den Sensordaten extrahiert werden.

13. Verfahren nach einem vorhergehenden Anspruch, wobei das Erlangen der Quellmerkmalsdaten beim Empfangen einer Benutzereingabe von dem zu authentifizierenden Benutzer (150) initiiert wird.

14. Verfahren nach einem vorhergehenden Anspruch, wobei das Authentifizieren des Benutzers (150) unter Verwendung eines Modells für maschinelles Lernen, ML-Modells, das die Quellmerkmalsdaten und die Benutzerattribute als Eingabe nimmt, durchgeführt wird.

15. Verfahren nach Anspruch 14, wobei die Zielmerkmalsdaten aus Trainingsdaten des Benutzers (150) erlangt werden, wobei die Trainingsdaten aus weiteren Sensordaten des Benutzers (150) erlernt werden, wie sie durch die mindestens eine Sensorvorrichtung (140-1:140-4) vor den Quellmerkmalsdaten, basierend auf denen der Benutzer (150) zu authentifizieren ist, erfasst werden, und wobei die Trainingsdaten zum Trainieren des mindestens einen ML-Modells verwendet werden.

16. Verfahren nach Anspruch 15, wobei das Erlangen der weiteren Quellmerkmalsdaten, aus denen die Trainingsdaten erlernt werden, beim Empfangen der Benutzereingabe von dem zu authentifizierenden Benutzer (150) initiiert wird und wobei das Empfangen der Benutzereingabe ein Trainieren des ML-Modells auslöst.

17. Authentifizierungssystem (200) zum Authentifizieren eines Benutzers (150) für einen Dienst, wobei das Authentifizierungssystem (200) eine Verarbeitungsschaltung (210) umfasst und die Verarbeitungsschaltung dazu konfiguriert ist, das Authentifizierungssystem (200) zu Folgendem zu veranlassen:
Erlangen von Quellmerkmalsdaten des zu authentifizierenden Benutzers (150) und von Benutzerattributen, wobei die Quellmerkmalsdaten eine durch den Benutzer (150) durchgeführte zeitabhängige Bewegung darstellen, wobei die Benutzerattribute Informationen des Benutzers (150), wie sie aus Sensordaten extrahierbar sind, darstellen und wobei die Quellmerkmalsdaten und die Benutzerattribute aus den Sensordaten des Benutzers (150), wie sie durch mindestens eine Sensorvorrichtung (140-1:140-4) erfasst werden, extrahiert werden; und
Authentifizieren des Benutzers (150) in Abhängigkeit von den Quellmerkmalsdaten und den Benutzerattributen, wobei der Benutzer (150) erfolgreich authentifiziert wird, wenn die Quellmerkmalsdaten ein Bewertungskriterium in Bezug auf Zielmerkmalsdaten erfüllen, wobei die Zielmerkmalsdaten eine für den Benutzer (150) und den Dienst erwartete zeitabhängige Bewegung darstellen, wobei der Dienst mit einem Authentifizierungszweck assoziiert ist, wobei das Bewertungskriterium eine Funktion des Authentifizierungszwecks und der Benutzerattribute ist und wobei das Bewertungskriterium einer Sicherheitsklasse entspricht, die auf mindestens einem des Folgenden basiert: der Art eines Ereignisses, eines Diensts oder einer Anwendung.

## Revendications

1. Procédé pour authentifier un utilisateur (150) pour un service, le procédé étant réalisé par un système d'authentification (200), le procédé comprenant :
l'obtention (S102) de données de caractéristiques sources de l'utilisateur (150) devant être authentifié, et d'attributs d'utilisateur, dans lequel les données de caractéristiques sources représentent un mouvement dépendant du temps réalisé par l'utilisateur (150), dans lequel les attributs d'utilisateur représentent des informations de l'utilisateur (150) telles qu'elles peuvent être extraites à partir de données de capteur, et dans lequel les données de caractéristiques sources et les attributs d'utilisateur sont extraits à partir de données de capteur de l'utilisateur (150) telles que collectées par au moins un dispositif capteur (140-1:140-4) ; et
l'authentification (S104) de l'utilisateur (150) en fonction des données de caractéristiques sources et des attributs d'utilisateur, dans lequel l'utilisateur (150) est authentifié avec succès lorsque les données de caractéristiques sources remplissent un critère d'évaluation par rapport à des données de caractéristiques cibles, dans lequel les données de caractéristiques cibles représentent un mouvement dépendant du temps attendu pour l'utilisateur (150) et le service, dans lequel le service est associé à une finalité d'authentification, dans lequel le critère d'évaluation est une fonction de la finalité d'authentification et des attributs d'utilisateur, et dans lequel le critère d'évaluation correspond à une classe de sécurité qui est basée sur au moins l'un parmi : le type d'événement, de service ou d'application.

2. Procédé selon la revendication 1, dans lequel le procédé comprend en outre, après avoir authentifié avec succès l'utilisateur (150) :
la réalisation (S106), pour l'utilisateur (150), d'une action relative au service.

3. Procédé selon la revendication 2, dans lequel l'action consiste à permettre à l'utilisateur (150) de réaliser l'un quelconque parmi : changer un mot de passe de système informatique, utiliser les données de caractéristiques sources comme un mot de passe de système informatique, obtenir l'accès à un système informatique, obtenir l'accès à un fichier informatique, obtenir l'accès à un service informatique, obtenir l'accès à un bâtiment (110), obtenir l'accès à une pièce dans un bâtiment (110), obtenir l'accès à un véhicule.

4. Procédé selon la revendication 1, dans lequel le procédé comprend en outre, après avoir échoué à authentifier avec succès l'utilisateur (150) :
l'incitation (S108) de l'utilisateur (150) à répéter le mouvement dépendant du temps, puis la répétition de l'obtention de données de caractéristiques sources de l'utilisateur (150) et la répétition de l'authentification de l'utilisateur (150) sur la base d'un mouvement dépendant du temps répété de l'utilisateur (150).

5. Procédé selon la revendication 4, dans lequel le fait que l'utilisateur (150) soit incité ou non à répéter le mouvement dépendant du temps est défini par le critère d'évaluation.

6. Procédé selon la revendication 1, dans lequel le procédé comprend en outre, après avoir échoué à authentifier avec succès l'utilisateur (150) :
la classification (S110) de l'utilisateur (150) comme un utilisateur non autorisé.

7. Procédé selon l'une quelconque des revendications précédentes, dans lequel le critère d'évaluation correspond à une classe de sécurité qui est basée sur au moins l'un parmi : le service, une entrée d'utilisateur, un modèle d'apprentissage automatique, AA.

8. Procédé selon l'une quelconque des revendications précédentes, dans lequel la finalité d'authentification est mise en correspondance avec un entier n, où 1≤*n*≤*N*, où n=1 représente la finalité d'authentification avec la sécurité la plus basse et n=N représente la finalité d'authentification avec la sécurité la plus élevée.

9. Procédé selon la revendication 8, dans lequel n comparaisons différentes sont effectuées entre les données de caractéristiques sources et les données de caractéristiques cibles pour déterminer si les données de caractéristiques sources remplissent le critère d'évaluation par rapport aux données de caractéristiques cibles.

10. Procédé selon l'une quelconque des revendications précédentes, dans lequel les attributs d'utilisateur sont mis en correspondance avec un entier t, où 1≤t≤T, où t=1 représente les attributs d'utilisateur avec la sécurité la plus basse et t=T représente les attributs d'utilisateur avec la sécurité la plus élevée.

11. Procédé selon une combinaison de la revendication 9 et de la revendication 10, dans lequel, selon le critère d'évaluation, les données de caractéristiques sources doivent réussir au moins t parmi les n comparaisons différentes pour que l'utilisateur (150) soit authentifié avec succès.

12. Procédé selon l'une quelconque des revendications précédentes, dans lequel il y a au moins deux dispositifs capteurs (140-1:140-4), et dans lequel les données de capteur telles que collectées par chacun des au moins deux capteurs se voient attribuer un facteur de pondération respectif dépendant du niveau de confiance, et
dans lequel les données de capteur provenant des au moins deux capteurs sont pondérées selon le facteur de pondération respectif dépendant du niveau de confiance lorsque les données de caractéristiques sources et les attributs d'utilisateur sont extraits à partir des données de capteur.

13. Procédé selon l'une quelconque des revendications précédentes, dans lequel l'obtention des données de caractéristiques sources est initiée lors de la réception d'une entrée d'utilisateur provenant de l'utilisateur (150) devant être authentifié.

14. Procédé selon l'une quelconque des revendications précédentes, dans lequel l'authentification de l'utilisateur (150) est réalisée en utilisant un modèle d'apprentissage automatique, AA, prenant les données de caractéristiques sources et les attributs d'utilisateur comme entrée.

15. Procédé selon la revendication 14, dans lequel les données de caractéristiques cibles sont obtenues à partir de données d'apprentissage de l'utilisateur (150), dans lequel les données d'apprentissage sont apprises à partir de données de capteur supplémentaires de l'utilisateur (150) telles que collectées par l'au moins un dispositif capteur (140-1:140-4) avant les données de caractéristiques sources sur la base desquelles l'utilisateur (150) doit être authentifié, et dans lequel les données d'apprentissage sont utilisées pour l'apprentissage de l'au moins un modèle d'AA.

16. Procédé selon la revendication 15, dans lequel l'obtention des données de caractéristiques sources supplémentaires à partir desquelles les données d'apprentissage sont apprises est initiée lors de la réception d'une entrée d'utilisateur provenant de l'utilisateur (150) devant être authentifié, et dans lequel la réception de l'entrée d'utilisateur déclenche l'apprentissage du modèle d'AA.

17. Système d'authentification (200) pour authentifier un utilisateur (150) pour un service, le système d'authentification (200) comprenant une circuiterie de traitement (210), la circuiterie de traitement étant configurée pour amener le système d'authentification (200) à :
obtenir des données de caractéristiques sources de l'utilisateur (150) devant être authentifié, et des attributs d'utilisateur, dans lequel les données de caractéristiques sources représentent un mouvement dépendant du temps réalisé par l'utilisateur (150), dans lequel les attributs d'utilisateur représentent des informations de l'utilisateur (150) telles qu'elles peuvent être extraites à partir de données de capteur, et dans lequel les données de caractéristiques sources et les attributs d'utilisateur sont extraits à partir de données de capteur de l'utilisateur (150) telles que collectées par au moins un dispositif capteur (140-1:140-4) ; et
authentifier l'utilisateur (150) en fonction des données de caractéristiques sources et des attributs d'utilisateur, dans lequel l'utilisateur (150) est authentifié avec succès lorsque les données de caractéristiques sources remplissent un critère d'évaluation par rapport à des données de caractéristiques cibles, dans lequel les données de caractéristiques cibles représentent un mouvement dépendant du temps attendu pour l'utilisateur (150) et le service, dans lequel le service est associé à une finalité d'authentification, dans lequel le critère d'évaluation est une fonction de la finalité d'authentification et des attributs d'utilisateur, et dans lequel le critère d'évaluation correspond à une classe de sécurité qui est basée sur au moins l'un parmi : le type d'événement, de service ou d'application.
